(19) **Europäisches Patentamt European Patent Office Office européen des brevets**

(11) **EP 2 824 156 A1**

(12) **EUROPEAN PATENT APPLICATION**
published in accordance with Art. 153(4) EPC

(43) Date of publication:
**14.01.2015 Bulletin 2015/03**

(21) Application number: **13758702.8**

(22) Date of filing: **31.01.2013**

(51) Int Cl.:
***C09J 201/00*** (2006.01)      ***C09J 4/00*** (2006.01)
***C09J 7/00*** (2006.01)      ***C09J 11/04*** (2006.01)

(86) International application number:
**PCT/JP2013/052267**

(87) International publication number:
**WO 2013/132933 (12.09.2013 Gazette 2013/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.03.2012 JP 2012048299**
     **31.08.2012 JP 2012191509**

(71) Applicant: **Nitto Denko Corporation**
**Osaka 567-8680 (JP)**

(72) Inventors:
• **TOJO, Midori**
  **Ibaraki-shi**
  **Osaka 567-8680 (JP)**
• **TERADA, Yoshio**
  **Ibaraki-shi**
  **Osaka 567-8680 (JP)**
• **FURUTA, Kenji**
  **Ibaraki-shi**
  **Osaka 567-8680 (JP)**

(74) Representative: **Grünecker, Kinkeldey, Stockmair & Schwanhäusser**
**Leopoldstrasse 4**
**80802 München (DE)**

(54) **ADHESIVE RAW MATERIAL AND THERMALLY CONDUCTIVE ADHESIVE SHEET**

(57)     A pressure-sensitive adhesive material contains a monomer and/or a polymer and 55 mass % or more of thermally conductive particles. The thermally conductive particles contain first thermally conductive particles having a particle size of primary particle based on volume of less than 10 $\mu$m and having a first particle size distribution and second thermally conductive particles having a particle size of primary particle based on volume of 10 $\mu$m or more and having a second particle size distribution. The first thermally conductive particles are contained in the thermally conductive particles at a ratio of 10 to 80 mass %. The second thermally conductive particles are contained in the thermally conductive particles at a ratio of 20 to 90 mass %.

EP 2 824 156 A1

**Description**

Technical Field

The present invention relates to a pressure-sensitive adhesive material and a thermally conductive pressure-sensitive adhesive sheet obtained by using the pressure-sensitive adhesive material.

Background Art

It has been conventionally known that by allowing an acrylic pressure-sensitive adhesive to contain a filler having thermally conductive properties, the thermally conductive properties of a thermally conductive pressure-sensitive adhesive sheet are improved, compared to those of a pressure-sensitive adhesive that serves as a base.
For example, a thermally conductive flame retardant pressure-sensitive adhesive sheet containing an acrylic polymer, a flame retardant (for example, aluminum hydroxide) that has thermally conductive properties and fails to have a halogen, and a thermally conductive filler (for example, aluminum oxide) has been proposed (ref: for example, the following Patent Document 1).

Prior Art Document

Patent Document

Patent Document 1: Japanese Unexamined Patent Publication No. 2002-294192

Summary of the Invention

Problems to be solved by the Invention

In the thermally conductive flame retardant pressure-sensitive adhesive sheet described in the above-described Patent Document 1, however, there is a disadvantage that when a large amount of the flame retardant and a large amount of the thermally conductive filler are blended in the acrylic polymer in order to improve the flame retardancy and the thermally conductive properties thereof, the elasticity of the thermally conductive flame retardant pressure-sensitive adhesive sheet is increased and the adhesive force thereof is reduced.
It is an object of the present invention to provide a pressure-sensitive adhesive material that is capable of achieving both a reduction in elasticity and improvement of adhesive properties of a thermally conductive pressure-sensitive adhesive sheet and the thermally conductive pressure-sensitive adhesive sheet that is obtained by using the pressure-sensitive adhesive material.

Solution to the Problems

In order to achieve the above-described object, a pressure-sensitive adhesive material of the present invention contains a monomer and/or a polymer and 55 mass % or more of thermally conductive particles, wherein the thermally conductive particles contain first thermally conductive particles having a particle size of primary particle based on volume of less than 10 $\mu$m and having a first particle size distribution and second thermally conductive particles having a particle size of primary particle based on volume of 10 $\mu$m or more and having a second particle size distribution and the first thermally conductive particles are contained in the thermally conductive particles at a ratio of 10 to 80 mass % and the second thermally conductive particles are contained in the thermally conductive particles at a ratio of 20 to 90 mass %.
In the pressure-sensitive adhesive material of the present invention, it is preferable that the first thermally conductive particles are contained in the thermally conductive particles at a ratio of 20 to 80 mass % and the second thermally conductive particles are contained in the thermally conductive particles at a ratio of 20 to 80 mass %.
In the pressure-sensitive adhesive material of the present invention, it is preferable that the thermally conductive particles are a hydrated metal compound.
In the pressure-sensitive adhesive material of the present invention, it is preferable that the pressure-sensitive adhesive material has a viscosity at 23°C measured by using a B-type viscometer of 50 Pa·s or less.
A thermally conductive pressure-sensitive adhesive sheet of the present invention includes a pressure-sensitive adhesive layer obtained by allowing the above-described pressure-sensitive adhesive material to react.
In the thermally conductive pressure-sensitive adhesive sheet of the present invention, it is preferable that the pressure-sensitive adhesive layer has a tensile elastic modulus of 0.1 to 10 MPa.
In the thermally conductive pressure-sensitive adhesive sheet of the present invention, it is preferable that the thermally conductive pressure-sensitive adhesive sheet has a peel adhesive force of 3 N/20 mm or more at the time of being peeled from an aluminum board at a peeling angle of 90 degrees and a peeling rate of 300 mm/min after adhering to the aluminum board.

In the thermally conductive pressure-sensitive adhesive sheet of the present invention, it is preferable that the thermally conductive pressure-sensitive adhesive sheet has hardness of 90 or less at the time of being measured 30 seconds after being brought into tight contact with a pressure surface of a type C durometer in a type C hardness test.

In the thermally conductive pressure-sensitive adhesive sheet of the present invention, it is preferable that the pressure-sensitive adhesive layer has thermal conductivity of 0.3 W/m·K or more.

Effect of the Invention

According to the pressure-sensitive adhesive material of the present invention, 55 mass % or more of the thermally conductive particles are contained in the total amount thereof and the thermally conductive particles contain 10 to 80 mass % of the first thermally conductive particles having a particle size of primary particle based on volume of less than 10 $\mu$m and having a first particle size distribution and 20 to 90 mass % of the second thermally conductive particles having a particle size of primary particle based on volume of 10 $\mu$m or more and having a second particle size distribution.

Thus, a reduction in elasticity and improvement of adhesive properties of the thermally conductive pressure-sensitive adhesive sheet of the present invention obtained by using the pressure-sensitive adhesive material are capable of being achieved.

Brief Description of the Drawings

[FIG. 1] FIG. 1 shows process drawings for illustrating a method for fabricating a thermally conductive pressure-sensitive adhesive sheet:

FIG. 1 (a) illustrating a step of applying a pressure-sensitive adhesive material onto a base film,
FIG. 1 (b) illustrating a step of disposing a cover film on a coating film of the pressure-sensitive adhesive material, and
FIG. 1 (c) illustrating a step of allowing the pressure-sensitive adhesive material to react.

[FIG. 2] FIG. 2 shows a polygonal line graph for illustrating a relationship of a tensile elastic modulus and a 90 degree peel adhesive force, and a proportion of first thermally conductive particles.
[FIG. 3] FIG. 3 shows explanatory views of a thermal property evaluation apparatus:

FIG. 3 (a) illustrating a front view and
FIG. 3(b) illustrating a side view.

[FIG. 4] FIG. 4 shows a particle size distribution of first thermally conductive particles and second thermally conductive particles in a pressure-sensitive adhesive material in Example 4.

Embodiment of the Invention

A pressure-sensitive adhesive material of the present invention contains a monomer and/or a polymer and thermally conductive particles.

Examples of the monomer include, as an essential component, an alkyl (meth)acrylate monomer and include, as an arbitrary component, a polar group-containing monomer, a polyfunctional monomer, and a copolymerizable monomer that is copolymerizable with the monomer.

The alkyl (meth)acrylate monomer is an alkyl methacrylate monomer and/or an alkyl acrylate monomer. Examples thereof include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate.

Of the alkyl (meth)acrylate monomers, in view of keeping well-balanced adhesive properties, in particular, preferably, a C2-12 alkyl (meth)acrylate is used, or more preferably, a C4-9 alkyl (meth)acrylate is used.

The alkyl (meth)acrylate monomer is blended in the monomer at a ratio of, for example, 60 mass % or more, or preferably 80 mass % or more, and of, for example, 99 mass % or less.

Examples of the polar group-containing monomer include a nitrogen-containing monomer, a hydroxyl group-containing monomer, a sulfo group-containing monomer, a nitrogen and hydroxyl group-containing monomer, a nitrogen and sulfo group-containing monomer, a hydroxyl group and phosphoric acid group-containing monomer, and a carboxyl group-containing monomer.

Examples of the nitrogen-containing monomer include a cyclic (meth)acrylamide such as N-(meth)acryloylmorpholine and N-acryloylpyrrolidine; an acyclic (meth)acrylamide such as (meth)acrylamide and N-substituted (meth)acrylamide (for example, N-alkyl (meth)acrylamide such as N-ethyl (meth)acrylamide and N-n-butyl (meth)acrylamide and N,N-dialkyl (meth)acrylamide such as N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, and N,N-di(t-butyl) (meth)acrylamide); an N-vinyl cyclic amide such as N-vinyl-2-pyrrolidone (NVP), N-vinyl-2-piperidone, N-vinyl-3-morpholinone, N-vinyl-2-caprolactam, N-vinyl-1,3-oxazine-2-one, and N-vinyl-3,5-morpholinedione; an amino group-containing monomer such as aminoethyl (meth)acrylate, N,N-dimethylaminoethyl (meth)acrylate, and N,N-dimethylaminopropyl (meth)acrylate; a maleimide skeleton-containing monomer such as N-cyclohexylmaleimide and N-phenylmaleimide; and an itaconimide-based monomer such as N-methylitaconimide, N-ethylitaconimide, N-butylitaconimide, N-2-ethylhexylitaconimide, N-laurylitaconimide, and N-cyclohexylitaconimide.

Examples of the hydroxyl group-containing monomer include 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl) methyl methacrylate.

Examples of the sulfo group-containing monomer include styrene sulfonic acid, allyl sulfonic acid, sulfopropyl (meth)acrylate, and (meth)acryloyloxy naphthalene sulfonic acid.

An example of the nitrogen and hydroxyl group-containing monomer includes an N-hydroxyalkyl (meth)acrylamide such as N-(2-hydroxyethyl) (meth)acrylamide (HEAA), N-(2-hydroxypropyl) (meth)acrylamide, N-(1-hydroxypropyl) (meth)acrylamide, N-(3-hydroxypropyl) (meth)acrylamide, N-(2-hydroxybutyl) (meth)acrylamide, N-(3-hydroxybutyl) (meth)acrylamide, and N-(4-hydroxybutyl) (meth)acrylamide.

Examples of the nitrogen and sulfo group-containing monomer include 2-(meth)acrylamide-2-methylpropanesulfonic acid and (meth)acrylamide propanesulfonic acid.

An example of the hydroxyl group and phosphoric acid group-containing monomer includes 2-hydroxyethyl acryloyl phosphate.

Examples of the carboxyl group-containing monomer include (meth)acrylic acid, itaconic acid, maleic acid, fumaric acid, crotonic acid, isocrotonic acid, maleic anhydride, and itaconic anhydride.

Of the polar group-containing monomers, in view of imparting high adhesive properties and a high holding force to a pressure-sensitive adhesive layer (described later), preferably, a nitrogen-containing monomer, a hydroxyl group-containing monomer, and a nitrogen and hydroxyl group-containing monomer are used, or more preferably, N-vinyl-2-pyrrolidone, N-(meth)acryloylmorpholine, N,N-diethyl (meth)acrylamide, hydroxyethyl (meth)acrylate, hydroxybutyl (meth)acrylate, and N-(2-hydroxyethyl) (meth)acrylamide are used.

The polar group-containing monomer is blended in the monomer at a ratio of, for example, 5 mass % or more, preferably 5 to 30 mass %, or more preferably 5 to 25 mass %. When the mixing proportion of the polar group-containing monomer is within the above-described range, an excellent holding force is capable of being imparted to the pressure-sensitive adhesive layer (described later).

The polyfunctional monomer is a monomer that has a plurality of ethylenically unsaturated hydrocarbon groups. Examples thereof include hexanediol (meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, dibutyl (meth)acrylate, and hexydyl (meth)acrylate.

The polyfunctional monomer is blended in the monomer at a ratio of, for example, 2 mass % or less, preferably 0.01 to 2 mass %, or more preferably 0.02 to 1 mass %. When the mixing proportion of the polyfunctional monomer is within the above-described range, an adhesive force of the pressure-sensitive adhesive layer (described later) is capable of being improved.

Examples of the copolymerizable monomer include an epoxy group-containing monomer such as glycidyl (meth)acrylate and allyl glycidyl ether; an alkoxy group-containing monomer such as 2-methoxyethyl (meth)acrylate, 3-methoxypropyl (meth)acrylate, methoxyethylene glycol (meth)acrylate, and methoxypolypropylene glycol (meth)acrylate; a cyano group-containing monomer such as acrylonitrile and methacrylonitrile; a styrene-based monomer such as styrene and $\alpha$-methylstyrene; an $\alpha$-olefin such as ethylene, propylene, isoprene, butadiene, and isobutylene; an isocyanate group-containing monomer such as 2-isocyanate ethyl acrylate and 2-isocyanate ethyl methacrylate; a vinyl ester-based monomer such as vinyl acetate and vinyl propionate; a vinyl ether-based monomer such as alkyl vinyl ether; a heterocycle-containing (meth)acrylate such as tetrahydroflufuryl (meth)acrylate; a halogen atom-containing monomer such as fluoro-oalkyl (meth)acrylate; an alkoxysilyl group-containing monomer such as 3-methacryloxypropyl trimethoxysilane and vinyltrimethoxysilane; a siloxane skeleton-containing monomer such as (meth)acryl group-containing silicone; an alicyclic hydrocarbon group-containing (meth)acrylate such as cyclopentyl (meth)acrylate, cyclohexyl (meth)acrylate, bornyl (meth)acrylate, and isobornyl (meth)acrylate; and an aromatic hydrocarbon group-containing (meth)acrylate such as phenyl (meth)acrylate, benzyl (meth)acrylate, phenoxyethyl (meth)acrylate, and (meth)acrylic acid phenoxy diethylene glycol.

Of the copolymerizable monomers, preferably, an alkoxy group-containing monomer is used, or more preferably, 2-methoxyethyl acrylate is used. By blending the alkoxy group-containing monomer, the adhesiveness of the pressure-sensitive adhesive layer (described later) with respect to an adherend is capable of being improved and heat from the adherend is capable of being efficiently conducted.

The copolymerizable monomer is blended in the monomer at a ratio of, for example, 30 mass % or less, or preferably 20 mass % or less.

These monomers can be used alone (one only) or in combination of two or more.

The monomer is blended in the pressure-sensitive adhesive material at a ratio of, for example, 1 to 45 mass %, or preferably 10 to 40 mass %.

An example of the polymer includes a polymer obtained by allowing the above-described monomer to react. To be specific, the polymer is not particularly limited and, for example, an acrylic polymer, to be more specific, an acrylic polymer in which as an essential component, an alkyl (meth)acrylate monomer is used and as an arbitrary component, a polar group-containing monomer, a polyfunctional monomer, and a copolymerizable monomer that is copolymerizable with the monomer are used is used. The polymer includes a partial polymer of the above-described monomer.

These polymers can be used alone (one only) or in combination of two or more.

The polymer is blended in the pressure-sensitive adhesive material at a ratio of, for example, 1 to 45 mass %, or preferably 10 to 40 mass %.

When both of the monomer and the polymer are blended in the pressure-sensitive adhesive material, the monomer and the polymer are blended in the pressure-sensitive adhesive material at a ratio of, for example, 1 to 45 mass %, or preferably 10 to 40 mass % in the total amount thereof.

An example of the thermally conductive particles includes a hydrated metal compound.

The hydrated metal compound has a decomposition starting temperature in a range of 150 to 500°C. The hydrated metal compound is a compound represented by a general formula $MxOy \cdot nH_2O$ (wherein M is a metal atom, "x" and "y" are an integer of 1 or more determined by a valence of the metal, and "n" is the number showing the crystal water to be contained) or a double salt containing the above-described compound.

Examples of the hydrated metal compound include aluminum hydroxide [$Al_2O_3.3H_2O$ or $Al(OH)_3$], boehmite [$Al_2O_3 \cdot H_2O$ or $AlOOH$], magnesium hydroxide [$MgO \cdot H_2O$ or $Mg(OH)_2$], calcium hydroxide [$CaO \cdot H_2O$ or $Ca(OH)_2$], zinc hydroxide [$Zn(OH)_2$], silica [$H_4SiO_4$, $H_2SiO_3$, or $H_2Si_2O_5$], iron hydroxide [$Fe_2O_3 \cdot H_2O$ or $2FeO(OH)$], copper hydroxide [$Cu(OH)_2$], barium hydroxide [$BaO \cdot H_2O$ or $BaO \cdot 9H_2O$] zirconium oxide hydrate [$ZrO \cdot nH_2O$], tin oxide hydrate [$SnO \cdot H_2O$], basic magnesium carbonate [$3MgCO_3 \cdot Mg(OH)_2 \cdot 3H_2O$], hydrotalcite [$6MgO \cdot Al_2O_3 \cdot H_2O$], dawsonite [$Na_2CO_3 \cdot Al_2O_3 \cdot nH_2O$], borax [$Na_2O \cdot B_2O_5 \cdot 5H_2O$], and zinc borate [$2ZnO \cdot 3B_2O_5 \cdot 3.5H_2O$].

A commercially available product can be used as the hydrated metal compound. Examples of the commercially available product include, as the aluminum hydroxide, trade name: "HIGILITE H-100-ME" (a primary average particle size of 75 $\mu$m) (manufactured by SHOWA DENKO K.K.), trade name: "HIGILITE H-10" (a primary average particle size of 55 $\mu$m) (manufactured by SHOWA DENKO K.K.), trade name: "HIGILITE H-32" (a primary average particle size of 8 $\mu$m) (manufactured by SHOWA DENKO K.K.), trade name: "HIGILITE H-31" (a primary average particle size of 20 $\mu$m) (manufactured by SHOWA DENKO K.K.), trade name: "HIGILITE H-42" (a primary average particle size of 1 $\mu$m) (manufactured by SHOWA DENKO K.K.), and trade name: "B 103ST" (a primary average particle size of 8 $\mu$m) (manufactured by Nippon Light Metal Co., Ltd.). Also, an example thereof includes, as the magnesium hydroxide, trade name: "KISUMA 5A" (a primary average particle size of 1 $\mu$m) (manufactured by Kyowa Chemical Industry Co., Ltd.).

In addition to the above-described hydrated metal compound, examples of the thermally conductive particles include boron nitride, aluminum nitride, silicon nitride, gallium nitride, silicon carbide, silicon dioxide, aluminum oxide, magnesium oxide, titanium oxide, zinc oxide, tin oxide, copper oxide, nickel oxide, antimony-doped tin oxide, calcium carbonate, barium titanate, potassium titanate, copper, silver, gold, nickel, aluminum, platinum, carbon black, carbon tube (carbon nanotube), carbon fiber, and diamond.

A commercially available product can be used as the thermally conductive particles. Examples of the commercially available product include, as the boron nitride, trade name: "HP-40" (manufactured by MIZUSHIMA FERROALLOY CO., LTD.) and trade name: "PT620" (manufactured by Momentive Performance Materials Inc.); as the aluminum oxide, trade name: "AS-50" (manufactured by SHOWA DENKO K.K.) and trade name: "AS-10" (manufactured by SHOWA DENKO K.K.); as the antimony-doped tin oxide, trade name: "SN-100S" (manufactured by ISHIHARA SANGYO KAISHA, LTD.), trade name: "SN-100P" (manufactured by ISHIHARA SANGYO KAISHA, LTD.), and trade name: "SN-100D (an aqueous dispersion product)" (manufactured by ISHIHARA SANGYO KAISHA, LTD.); as the titanium oxide, trade name: the "TTO series" (manufactured by ISHIHARA SANGYO KAISHA, LTD.); and as the zinc oxide, trade name: "SnO-310" (manufactured by SUMITOMO OSAKA CEMENT Co., Ltd.), trade name: "SnO-350" (manufactured by SUMITOMO OSAKA CEMENT Co., Ltd.), and trade name: "SnO-410" (manufactured by SUMITOMO OSAKA CEMENT Co., Ltd.).

These thermally conductive particles can be used alone (one only) or in combination of two or more.

Of the thermally conductive particles, preferably, a hydrated metal compound is used, or more preferably, in view of imparting high thermally conductive properties and high flame retardancy to the pressure-sensitive adhesive layer (described later), aluminum hydroxide is used.

A shape of each of the thermally conductive particles is not particularly limited and examples of the shape thereof may include a bulk shape, a needle shape, a plate shape, and a layer shape. Examples of the bulk shape include a sphere shape, a rectangular parallelepiped shape, and a pulverized shape or a deformed shape thereof.

The thermally conductive particles are blended in the pressure-sensitive adhesive material at a ratio of, for example, 55 mass % or more, preferably 60 mass % or more, or more preferably 65 mass % or more, and of, for example, 90 mass % or less.

When the mixing proportion of the thermally conductive particles is within the above-described range, high thermally conductive properties and high flame retardancy are capable of being imparted to the pressure-sensitive adhesive layer (described later).

The thermally conductive particles contain first thermally conductive particles having a first particle size distribution and second thermally conductive particles having a second particle size distribution.

In the particle size distribution (the first particle size distribution) of the first thermally conductive particles, the average particle size of primary particle based on volume is less than 10 $\mu$m (preferably, 5 $\mu$m or less, or more preferably 2 $\mu$m or less, and, for example, 0.1 $\mu$m or more).

In the particle size distribution (the second particle size distribution) of the second thermally conductive particles, the average particle size of primary particle based on volume is 10 $\mu$m or more (preferably, 20 $\mu$m or more, or more preferably 30 $\mu$m or more, and, for example, 100 $\mu$m or less).

The particle size distribution is obtained by a particle size distribution measurement method in a laser scattering method (to be specific, measured with a laser scattering particle size analyzer). The average particle size of primary particle based on volume is obtained as a D50 value (a cumulative 50 % median diameter) based on the particle size distribution that is measured.

The first thermally conductive particles are contained in the thermally conductive particles at a ratio of, for example, 10 to 80 mass %, preferably 20 to 80 mass %, or more preferably 30 to 60 mass %.

The second thermally conductive particles are contained in the thermally conductive particles at a ratio of, for example, 20 to 90 mass %, preferably 20 to 80 mass %, or more preferably 30 to 60 mass %.

Next, a method for preparing a pressure-sensitive adhesive material is described.

In order to prepare the pressure-sensitive adhesive material, first, a monomer composition containing the above-described monomer and a polymerization initiator is prepared or the above-described polymer is dissolved into a solvent such as an organic solvent, so that a polymer composition is prepared.

In order to prepare the monomer composition, first, the polymerization initiator is blended into the above-described monomer.

Examples of the polymerization initiator include a photopolymerization initiator and a thermal polymerization initiator.

Examples of the photopolymerization initiator include a benzoin ether-based photopolymerization initiator, an acetophenone-based photopolymerization initiator, an $\alpha$-ketol-based photopolymerization initiator, an aromatic sulfonyl chloride-based photopolymerization initiator, a photo active oxime-based photopolymerization initiator, a benzoin-based photopolymerization initiator, a benzyl-based photopolymerization initiator, a benzophenone-based photopolymerization initiator, and a thioxanthone-based photopolymerization initiator.

Examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethane-1-one, and anisole methyl ether.

Examples of the acetophenone-based photopolymerization initiator include 2,2-diethoxyacetophenone, 2,2-dimethoxy-2-phenylacetophenone, 4-phenoxydichloroacetophenone, and 4-(t-butyl)dichloroacetophenone.

Examples of the $\alpha$-ketol-based photopolymerization initiator include 2-methyl-2-hydroxypropiophenone, 1-[4-(2-hydroxyethyl)phenyl]-2-methylpropane-1-one, and 1-hydroxycyclohexyl phenyl ketone.

An example of the aromatic sulfonyl chloride-based photopolymerization initiator includes 2-naphthalenesulfonylchloride.

An example of the photo active oxime-based photopolymerization initiator includes 1-phenyl-1,1-propanedione-2-(o-ethoxycarbonyl)-oxime.

An example of the benzoin-based photopolymerization initiator includes benzoin.

An example of the benzyl-based photopolymerization initiator includes benzyl.

Examples of the benzophenone-based photopolymerization initiator include benzophenone, benzoylbenzoic acid, 3,3'-dimethyl-4-methoxybenzophenone, and polyvinylbenzophenone.

Examples of the thioxanthone-based photopolymerization initiator include thioxanthone, 2-chlorothioxanthone, 2-methylthioxanthone, 2,4-dimethylthioxanthone, isopropyl thioxanthone, 2,4-diisopropylthioxanthone, and decylthioxanthone.

Examples of the thermal polymerization initiator include an azo-based polymerization initiator such as 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis (2-amidinopropane) dihydrochloride, 2,2'-azobis[2-(5-methyl-2-imidazoline-2-yl)propane] dihydrochloride, 2,2'-azobis(2-methylpropioneamidine) disulfate, 2,2'-azobis(N,N'-dimethyleneisobutylamidine) hydrochloride, and 2,2'-azobis[N-(2-carboxyethyl)-2-methylpropioneamidine] hydrate; a peroxide-based polymerization initiator such as dibenzoyl peroxide, t-butyl permaleate, t-butyl hydroperoxide, and hydrogen peroxide; a persulfate such as potassium persulfate and ammonium persulfate; and a redox-based polymerization initiator such as combination of persulfate and sodium hydrogen sulfite and combination of peroxide and sodium ascorbate.

These polymerization initiators can be used alone (one only) or in combination of two or more.

Of the polymerization initiators, in view of advantages of capable of shortening a polymerization duration, preferably, a photopolymerization initiator is used.

When a photopolymerization initiator is blended as the polymerization initiator, an amount of the photopolymerization initiator is not particularly limited and the photopolymerization initiator is blended at a ratio of, for example, 0.01 to 5 parts by mass, or preferably 0.05 to 3 parts by mass with respect to 100 parts by mass of the monomer.

When a thermal polymerization initiator is blended as the polymerization initiator, an amount of the thermal polymerization initiator is not particularly limited and the thermal polymerization initiator is blended at a proportion that is available.

Next, in order to prepare the monomer composition, a part of the monomer is polymerized as required.

In order to polymerize a part of the monomer, when a photopolymerization initiator is blended, an ultraviolet ray is applied to a mixture of the monomer and the photopolymerization initiator. In the application of the ultraviolet ray, the application is performed with an irradiation energy that excites the photopolymerization initiator so that the viscosity (a BH viscometer, a No. 5 rotor, 10 rpm, a measurement temperature of 30°C) of the monomer composition will be, for example, 5 to 30 Pa·s, or preferably 10 to 20 Pa·s.

When a thermal polymerization initiator is blended, a mixture of the monomer and the thermal polymerization initiator is heated at not less than a decomposition temperature of the thermal polymerization initiator, to be specific, at a polymerization temperature of around 20 to 100°C so that the viscosity (a BH viscometer, a No. 5 rotor, 10 rpm, a measurement temperature of 30°C) of the monomer composition will be, for example, 5 to 30 Pa·s, or preferably 10 to 20 Pa·s in the same manner as that in the case of blending of the photopolymerization initiator.

When the monomer composition is prepared by polymerizing a part of the monomer, first, an alkyl (meth)acrylate monomer, a monomer selected from a polar group-containing monomer and a polymerizable monomer, and a polymerization initiator are blended; as described above, a part of the monomer is polymerized; and thereafter, a polyfunctional monomer is also capable of being blended therein.

In this way, the monomer composition is prepared.

Also, an additive can be blended in the monomer composition and the polymer composition as required. Examples of the additive include a dispersant, a tackifier, an acrylic oligomer, a silane coupling agent, a fluorine-based surfactant, a plasticizer, a filler, an oxidation inhibitor, and a colorant.

Next, in order to prepare the pressure-sensitive adhesive material, the above-described thermally conductive particles are blended into the obtained monomer composition or the obtained polymer composition to be mixed.

The thermally conductive particles and the additive in a state of being dispersed or dissolved in a solvent such as an organic solvent can be blended into the monomer composition or the polymer composition.

In this way, the pressure-sensitive adhesive material is prepared.

The viscosity (a BM viscometer, a No. 4 rotor, 12 rpm, a measurement temperature of 23°C) of the obtained pressure-sensitive adhesive material is, for example, 50 Pa·s or less, preferably 5 to 40 Pa·s, or more preferably 10 to 35 Pa·s.

Bubbles can be also contained in the pressure-sensitive adhesive material. As described later, by fabricating a thermally conductive pressure-sensitive adhesive sheet using the pressure-sensitive adhesive material containing the bubbles, the thermally conductive pressure-sensitive adhesive sheet is capable of being prepared as a foamed material.

In order to allow the pressure-sensitive adhesive material to contain the bubbles, for example, by using a stirring device provided with a stator (anchor teeth) with many teeth on a disk having a through hole in the center thereof and a rotor (rotary teeth) that is opposed to the stator and has many teeth on the disk, the pressure-sensitive adhesive material is introduced between the teeth on the stator and the teeth on the rotor and a gas that forms the bubbles is introduced into the pressure-sensitive adhesive material through the through hole in the stator, while the rotor is allowed to run at high speed.

The gas that is introduced into the pressure-sensitive adhesive material is not particularly limited and examples thereof include an inert gas such as nitrogen, carbon dioxide, and argon and air.

As the gas that is introduced into the pressure-sensitive adhesive material, in view of not easily inhibiting a reaction of the pressure-sensitive adhesive material, preferably, an inert gas is used, or more preferably, nitrogen is used.

The bubbles are introduced at a ratio of, for example, 5 to 50 vol%, preferably 10 to 40 vol%, or more preferably 12 to 35 vol% with respect to the total volume of the pressure-sensitive adhesive material.

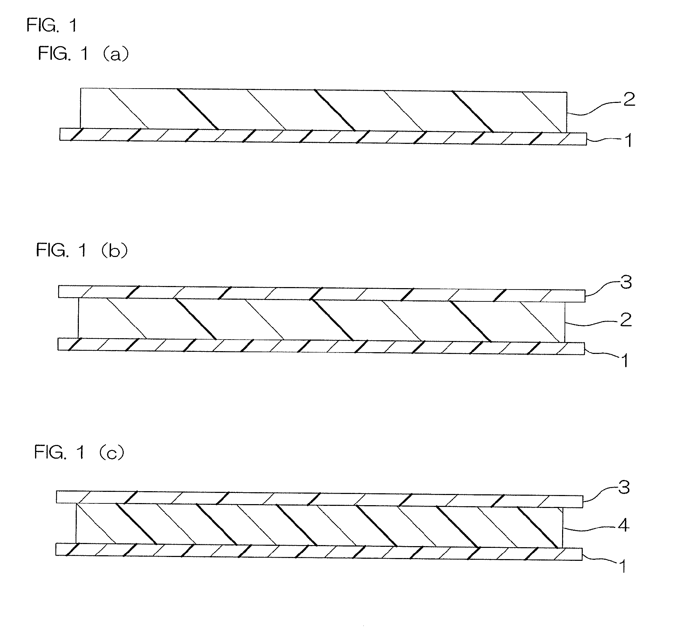

FIG. 1 shows process drawings for illustrating a method for fabricating a thermally conductive pressure-sensitive adhesive sheet.

Next, a method for fabricating a thermally conductive pressure-sensitive adhesive sheet is described.

In order to fabricate a thermally conductive pressure-sensitive adhesive sheet, first, as shown in FIG. 1 (a), a pressure-sensitive adhesive material 2 is applied to a surface subjected to a release treatment of a base film 1.

Examples of the base film 1 include a polyester film (a polyethylene terephthalate film or the like); a fluorine-based film that is prepared from a fluorine-based polymer (for example, polytetrafluoroethylene, polychlorotrifluoroethylene, polyvinyl fluoride, polyvinilidene fluoride, a tetrafluoroethylene-hexafluoropropylene copolymer, and a chlorofluoroethylene-vinilidene fluoride copolymer); an olefin-based resin film that is prepared from an olefin resin (polyethylene, polypropylene, or the like); a plastic substrate film (a synthetic resin film) such as a polyvinyl chloride film, a polyimide film, a polyamide film (a nylon film), and a rayon film; and papers such as wood free paper, Japanese paper, kraft paper, glassine paper, synthetic paper, and top-coated paper; and a complex of the above-described components by lamination.

When the pressure-sensitive adhesive material 2 contains the photopolymerization initiator, the base film 1 that transmits an ultraviolet ray is used so as not to interrupt the application of the ultraviolet ray to the pressure-sensitive adhesive material 2.

An example of a method for applying the pressure-sensitive adhesive material 2 to the base film 1 includes an extrusion coating method by roll coating, kiss roll coating, gravure coating, reverse coating, roll brush coating, spray coating, dip roll coating, bar coating, knife coating, air knife coating, curtain coating, lip coating, die coating, or the like.

The pressure-sensitive adhesive material 2 has a coating thickness of, for example, 10 to 10000 $\mu$m, preferably 50 to 5000 $\mu$m, or more preferably 100 to 3000 $\mu$m.

Next, as shown in FIG. 1 (b), in order to fabricate the thermally conductive pressure-sensitive adhesive sheet, a cover film 3 is disposed on a coating film of the pressure-sensitive adhesive material 2. The cover film 3 is disposed on the coating film so that the surface subjected to the release treatment of the cover film 3 is in contact with the coating film.

An example of the cover film 3 includes the same film as that in the above-described base film 1. When the pressure-sensitive adhesive material 2 contains the photopolymerization initiator, the cover film 3 that transmits an ultraviolet ray is used so as not to interrupt the application of the ultraviolet ray to the pressure-sensitive adhesive material 2.

Next, as shown in FIG. 1 (c), in order to fabricate the thermally conductive pressure-sensitive adhesive sheet, the pressure-sensitive adhesive material 2 is allowed to react, so that a pressure-sensitive adhesive layer 4 is formed.

As described above, in order to allow the pressure-sensitive adhesive material 2 to react, when the photopolymerization initiator is blended, an ultraviolet ray is applied to the pressure-sensitive adhesive material 2 and when the thermal polymerization initiator is blended, the pressure-sensitive adhesive material 2 is heated.

When the above-described polymer composition is blended into the pressure-sensitive adhesive material 2 and when the thermally conductive particles and the additive are dispersed or dissolved into the solvent to be blended into the pressure-sensitive adhesive material 2, as described above, the pressure-sensitive adhesive material 2 is applied and dried, so that the solvent is capable of being removed.

In this way, the thermally conductive pressure-sensitive adhesive sheet is obtained.

The pressure-sensitive adhesive layer 4 in the obtained thermally conductive pressure-sensitive adhesive sheet has a thickness of, for example, 10 to 10000 $\mu$m, preferably 50 to 5000 $\mu$m, or more preferably 100 to 3000 $\mu$m.

When the thickness of the pressure-sensitive adhesive layer 4 is thinner than 10 $\mu$m, a sufficient adhesive force and a sufficient holding force may not be capable of being obtained. When the coating thickness of the pressure-sensitive adhesive layer 4 is thicker than 10000 $\mu$m, sufficient thermally conductive properties may not be capable of being obtained.

The obtained thermally conductive pressure-sensitive adhesive sheet has a tensile elastic modulus (measured by a method described in Examples to be described later) of, for example, 0.1 to 10 MPa, preferably 0.2 to 8 MPa, or more preferably 0.5 to 5 MPa.

The obtained thermally conductive pressure-sensitive adhesive sheet has a 90 degree peel adhesive force (an adhesive force at the time of being peeled from a stainless steel board at a peeling angle of 90 degrees and a peeling rate of 300 mm/min after adhering to the stainless steel board, measured by a method described in Examples to be described later) of, for example, 3 N/20 mm or more, preferably 10 N/20 mm or more, or more preferably 15 N/20 mm or more, and of, for example, 100 N/20 mm or less.

The obtained thermally conductive pressure-sensitive adhesive sheet has hardness (measured in conformity with a type C hardness test specified in JIS J 7312) of, for example, 90 or less, or preferably 80 or less, and of, for example, 1 or more at the time of being measured 30 seconds after being brought into tight contact with a pressure surface of a type C durometer.

The pressure-sensitive adhesive layer 4 in the obtained thermally conductive pressure-sensitive adhesive sheet has thermal conductivity (measured by a method described in Examples to be described later) of, for example, 0.3 W/m·K or more, preferably 0.4 W/m·K or more, or more preferably 0.5 W/m·K or more, and of, for example, 10 W/m·K or less.

The thermally conductive pressure-sensitive adhesive sheet is obtained by allowing the pressure-sensitive adhesive material containing, in the total amount thereof, 55 mass % or more of the thermally conductive particles that contain 10 to 80 mass % of the first thermally conductive particles having an average particle size of primary particle based on volume of 10 μm or less and 20 to 90 mass % of the second thermally conductive particles having an average particle size of primary particle based on volume of above 10 μm to react.

Thus, according to the thermally conductive pressure-sensitive adhesive sheet, a reduction in elasticity and improvement of adhesive properties are capable of being achieved.

The thermally conductive pressure-sensitive adhesive sheet has excellent thermally conductive properties and excellent flame retardancy, so that the thermally conductive pressure-sensitive adhesive sheet is capable of being preferably used for uses such as a semiconductor device, a hard disk, an LED device (a television, lighting, a display, and the like), an EL device (an organic EL display, organic EL lighting, and the like), a capacitor, a condenser, a battery (a lithium ion battery and the like), and a power module.

Examples

The present invention will now be described in more detail by way of Examples and Comparative Examples. However, the present invention is not limited to the following Examples and Comparative Examples.

1. Examples and Comparative Examples

Example 1

(Preparation of Monomer Composition)

As monomers, 80 parts by mass of 2-ethyl hexyl acrylate, 12 parts by mass of 2-methoxyethyl acrylate, 7 parts by mass of N-vinyl-2-pyrrolidone (NVP), and 1 part by mass of hydroxyethylacrylamide (HEAA) were blended and mixed, so that a mixture of the monomers was obtained.

As photopolymerization initiators, 0.05 parts by mass of 2,2-dimethoxy-1,2-diphenylethane-1-one (trade name: "IRGACURE-651", manufactured by Chiba Japan Co., Ltd.) and 0.05 parts by mass of 1-hydroxycyclohexyl phenyl ketone (trade name: "IRGACURE-184", manufactured by Chiba Japan Co., Ltd.) were blended into the obtained mixture.

Thereafter, an ultraviolet ray was applied to the mixture and the polymerization was performed until the viscosity (a BH viscometer, a No. 5 rotor, 10 rpm, a measurement temperature of 30°C) thereof reached about 20 Pa·s, so that a partial polymer (in a syrup state) of the monomers in which a part of the monomers was polymerized was prepared.

Then, as a polyfunctional monomer, 0.05 parts by mass of dipentaerythritol hexaacrylate (trade name: "KAYARAD DPHA-40H", manufactured by NIPPON KAYAKU Co., Ltd.) and, as a dispersant, 3.4 parts by mass of trade name: "PLYSURF A212E" (manufactured by DAI-ICHI KOGYO SEIYAKU CO., LTD.) were blended into 100 parts by mass of the obtained partial polymer of the monomers and were mixed, so that a monomer composition was prepared.

A polymer obtained by polymerizing the obtained monomer composition had a glass transition temperature (measurement method: a thermogravimetric measurement) of -62.8°C.

(Preparation of Pressure-Sensitive Adhesive Material)

Next, as first thermally conductive particles, 100 parts by mass of an aluminum hydroxide powder (trade name: "HIGILITE H-42", shape: a pulverized shape, manufactured by SHOWA DENKO K.K.) having an average particle size (based on volume) of 1 μm and a maximum particle size (based on volume) of less than 10 μm and, as second thermally conductive particles, 100 parts by mass of an aluminum hydroxide powder (trade name: "HIGILITE H-10", shape: a pulverized shape, manufactured by SHOWA DENKO K.K.) having an average particle size (based on volume) of 55 μm

and a minimum particle size (based on volume) of 10 μm or more were blended into the obtained monomer composition and were mixed, so that a pressure-sensitive adhesive material was prepared.

The viscosity (a BM viscometer, a No. 4 rotor, 12 rpm, a measurement temperature of 23°C) of the pressure-sensitive adhesive material is shown in Table 1.

(Fabrication of Thermally Conductive Pressure-Sensitive Adhesive Sheet)

Thereafter, the obtained pressure-sensitive adhesive material was applied onto a release treated surface of a base film (a polyethylene terephthalate film, trade name: "DIAFOIL MRF38", manufactured by Mitsubishi Polyester Film GmbH) having one surface subjected to a release treatment so that the thickness thereof after being dried and cured was 1000 μm (ref: FIG. 1 (a)).

Next, a cover film (the same film as the base film) was disposed on a coating film of the pressure-sensitive adhesive material so that the coating film of the pressure-sensitive adhesive material was sandwiched between the cover film and the base film (ref: FIG. 1 (b)).

Next, an ultraviolet ray (an illuminance of about 5 mW/cm$^2$) was applied to the pressure-sensitive adhesive material from both sides (a side of the base film and a side of the cover film) thereof for 3 minutes.

In this way, the monomers in the pressure-sensitive adhesive material were polymerized, so that a thermally conductive pressure-sensitive adhesive sheet was fabricated (ref: FIG. 1 (c)).

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

Example 2

A pressure-sensitive adhesive material was prepared and a thermally conductive pressure-sensitive adhesive sheet was fabricated in the same manner as that in Example 1, except that the mixing amount of the first thermally conductive particles was changed to 43 parts by mass and the mixing amount of the second thermally conductive particles was changed to 297 parts by mass.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

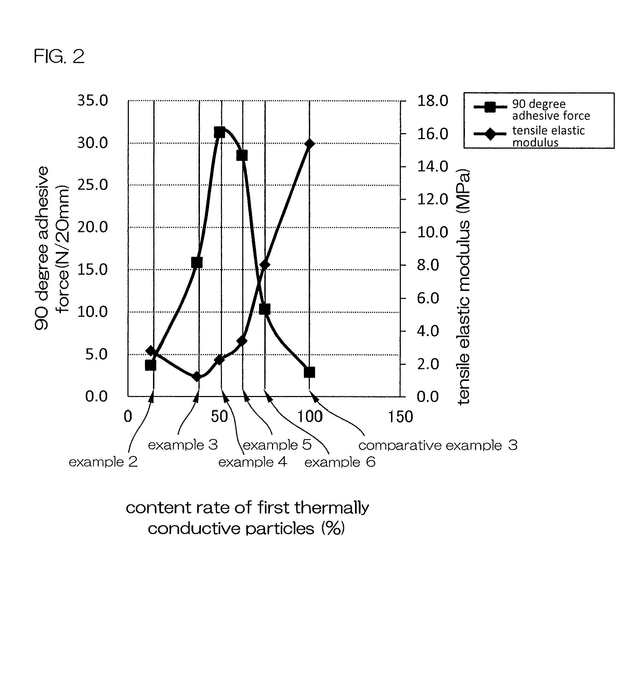

The tensile elastic modulus and the 90 degree peel adhesive force were plotted in the graph in FIG. 2.

Example 3

A pressure-sensitive adhesive material was prepared and a thermally conductive pressure-sensitive adhesive sheet was fabricated in the same manner as that in Example 1, except that the mixing amount of the first thermally conductive particles was changed to 128 parts by mass and the mixing amount of the second thermally conductive particles was changed to 212 parts by mass.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

The tensile elastic modulus and the 90 degree peel adhesive force were plotted in the graph in FIG. 2.

Example 4

A pressure-sensitive adhesive material was prepared and a thermally conductive pressure-sensitive adhesive sheet was fabricated in the same manner as that in Example 1, except that the mixing amount of the first thermally conductive particles was changed to 170 parts by mass and the mixing amount of the second thermally conductive particles was changed to 170 parts by mass.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

The tensile elastic modulus and the 90 degree peel adhesive force were plotted in the graph in FIG. 2.

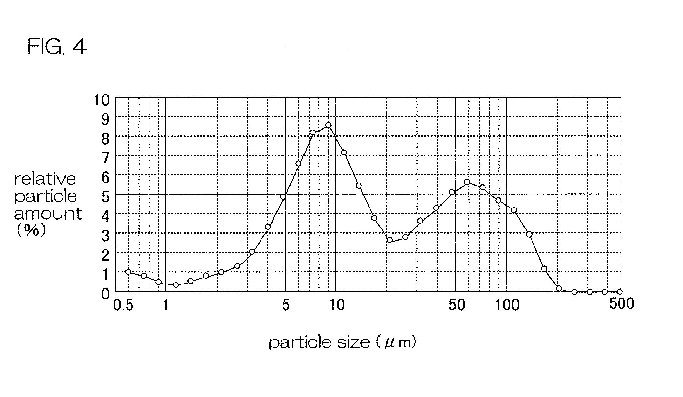

The particle size distribution of the first thermally conductive particles and the second thermally conductive particles in the pressure-sensitive adhesive material is shown in FIG. 4. In the particle size distribution, the peak was confirmed at 8 μm and 60 μm.

Example 5

A pressure-sensitive adhesive material was prepared and a thermally conductive pressure-sensitive adhesive sheet was fabricated in the same manner as that in Example 1, except that the mixing amount of the first thermally conductive particles was changed to 213 parts by mass and the mixing amount of the second thermally conductive particles was changed to 127 parts by mass.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

The tensile elastic modulus and the 90 degree peel adhesive force were plotted in the graph in FIG. 2.

Example 6

A pressure-sensitive adhesive material was prepared and a thermally conductive pressure-sensitive adhesive sheet was fabricated in the same manner as that in Example 1, except that the mixing amount of the first thermally conductive particles was changed to 255 parts by mass and the mixing amount of the second thermally conductive particles was changed to 85 parts by mass.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

The tensile elastic modulus and the 90 degree peel adhesive force were plotted in the graph in FIG. 2.

Example 7

A pressure-sensitive adhesive material was prepared in the same manner as that in Example 1, except that the mixing amount of the first thermally conductive particles was changed to 170 parts by mass and the mixing amount of the second thermally conductive particles was changed to 170 parts by mass.

The obtained pressure-sensitive adhesive material was stirred, while nitrogen was introduced, and bubbles were introduced into the pressure-sensitive adhesive material so as to have about 20 vol%.

The pressure-sensitive adhesive material into which the bubbles were introduced was allowed to react in the same manner as that in Example 1, so that a thermally conductive pressure-sensitive adhesive sheet was fabricated as a foamed material.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

Example 8

A pressure-sensitive adhesive material was prepared and a thermally conductive pressure-sensitive adhesive sheet was fabricated in the same manner as that in Example 1, except that as the second thermally conductive particles, an aluminum oxide powder (trade name: "AS-10", shape: a sphere shape, manufactured by SHOWA DENKO K.K.) having an average particle size (based on volume) of 35 $\mu$m was used.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 1.

Comparative Example 1

Thermally conductive particles were blended into a monomer composition in the same manner as that in Example 1, except that the first thermally conductive particles were not blended and the mixing amount of the second thermally conductive particles was changed to 340 parts by mass.

The thermally conductive particles were not capable of being dispersed in the monomer composition, so that a pressure-sensitive adhesive material was not capable of being prepared.

Comparative Example 2

A pressure-sensitive adhesive material was prepared and a thermally conductive pressure-sensitive adhesive sheet was fabricated in the same manner as that in Example 1, except that the mixing amount of the first thermally conductive particles was changed to 50 parts by mass and the mixing amount of the second thermally conductive particles was changed to 50 parts by mass.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 2.

Comparative Example 3

A pressure-sensitive adhesive material was prepared and a thermally conductive pressure-sensitive adhesive sheet was fabricated in the same manner as that in Example 1, except that the mixing amount of the first thermally conductive particles was changed to 340 parts by mass and the second thermally conductive particles were not blended.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 2.

The tensile elastic modulus and the 90 degree peel adhesive force were plotted in the graph in FIG. 2.

Comparative Example 4

A pressure-sensitive adhesive material was prepared and a thermally conductive pressure-sensitive adhesive sheet was fabricated in the same manner as that in Example 1, except that an aluminum hydroxide powder (trade name: "HIGILITE H-31", shape: a pulverized shape, manufactured by SHOWA DENKO K.K.) having an average particle size (based on volume) of 20 $\mu$m was used instead of the first thermally conductive particles.

The elongation, the tensile elastic modulus, the 90 degree peel adhesive force, the holding force, and the hardness of the thermally conductive pressure-sensitive adhesive sheet and the thermal conductivity and the thermal resistance of the pressure-sensitive adhesive layer are shown in Table 2.

2. Evaluation

(Tensile Test)

Each of the thermally conductive pressure-sensitive adhesive sheets fabricated in Examples and Comparative Examples was cut into pieces each having a width of 10 mm and a length of 60 mm to obtain samples. The tensile test of the obtained samples was performed in conformity with JIS K 6767.

The base film and the cover film were peeled from each of the samples and a stress-strain curve thereof was measured under an atmosphere of 23°C and 50 %RH using a universal tensile testing machine "TCM-1kNB" (manufactured by Minebea Co., Ltd.) at a distance between chucks of 20 mm and a tensile rate of 300 mm/min.

The tensile strength and the elongation were calculated from the measured stress-strain curve by the following formulation.

Tensile strength (MPa) = maximum load (N) before fracture of sample/cross-sectional area of sample (mm$^2$)

$$\text{Elongation (\%)} = (\text{length (mm) between chucks of sample at the time of fracture} - 20)/20 \times 100$$

Also, a tangential line was drawn in an initial rising phase of the obtained stress-strain curve, the load (N) at which the tangential line corresponded to 100 % elongation was divided by the cross-sectional area (mm$^2$) of the sample, and the obtained value was defined as a tensile elastic modulus (MPa).

(90 Degree Peel Test)

The base film (or the cover film) of each of the thermally conductive pressure-sensitive adhesive sheets fabricated in Examples and Comparative Examples was peeled and a PET film having a thickness of 25 $\mu$m was attached thereto to be cut into pieces each having a width of 20 mm and a length of 150 mm, so that evaluation samples were obtained.

The remaining cover film (or base film) was peeled from each of the evaluation samples, the pressure-sensitive adhesive layer was attached to an aluminum board (#1050) under an atmosphere of 23°C and 50 % RH, and then, the pressure-sensitive adhesive layer was pressed with respect to the aluminum board by one reciprocation of a 2 kg roller on the PET film.

After the resulting sample was allowed to stand at 23°C for 30 minutes, a 90 degree peel adhesive force thereof was measured in conformity with JIS Z 0237 using a universal tensile testing machine "TCM-1kNB" (manufactured by Minebea Co., Ltd.) at a peeling angle of 90 degrees and a tensile rate of 300 mm/min.

(Holding Force)

After each of the thermally conductive pressure-sensitive adhesive sheets was cut into pieces each having a size of 20 mm × 10 mm, the resulting pieces were attached to a PET film having a thickness of 25 μm, so that samples were obtained.

Next, a peeled surface of a portion having a size of 10 mm × 20 mm in the upper end portion of the sample was disposed on the lower end portion of a stainless steel (SUS 304BA) board under an atmosphere of 23°C and 50 %RH and then, the thermally conductive pressure-sensitive adhesive sheet was attached to the stainless steel board by one reciprocation of a 2 kg roller.

Thereafter, the resulting sample was allowed to stand still under an atmosphere of 80°C for 30 minutes, so that the attached (adhering) state was stabilized (stood) and then, the upper end portion of the stainless steel board was fixed and a weight of 300 g was suspended from the lower end portion of the sample under the conditions of 80°C.

The displacement (the moving distance) of the sample with respect to the stainless steel at the time of allowing the sample to stand under an atmosphere of 80°C for one hour was measured.

(Hardness)

A test was performed in conformity with JIS K 7312 under the following conditions using each of the thermally conductive pressure-sensitive adhesive sheets in Examples and Comparative Examples.

To be specific, the thermally conductive pressure-sensitive adhesive sheet was cut into pieces each having a width of 20 mm and a length of 20 mm. The laminates of the pieces so as to have a thickness of 4 mm were defined as evaluation samples. The hardness (Asker C hardness) of the samples 30 seconds after being brought into tight contact with a pressure surface of an Asker C durometer under an atmosphere of 23°C and 50 %RH was measured with the Asker C durometer (manufactured by KOBUNSHI KEIKI CO., LTD.).

(Thermal Conductivity, Thermal Resistance)

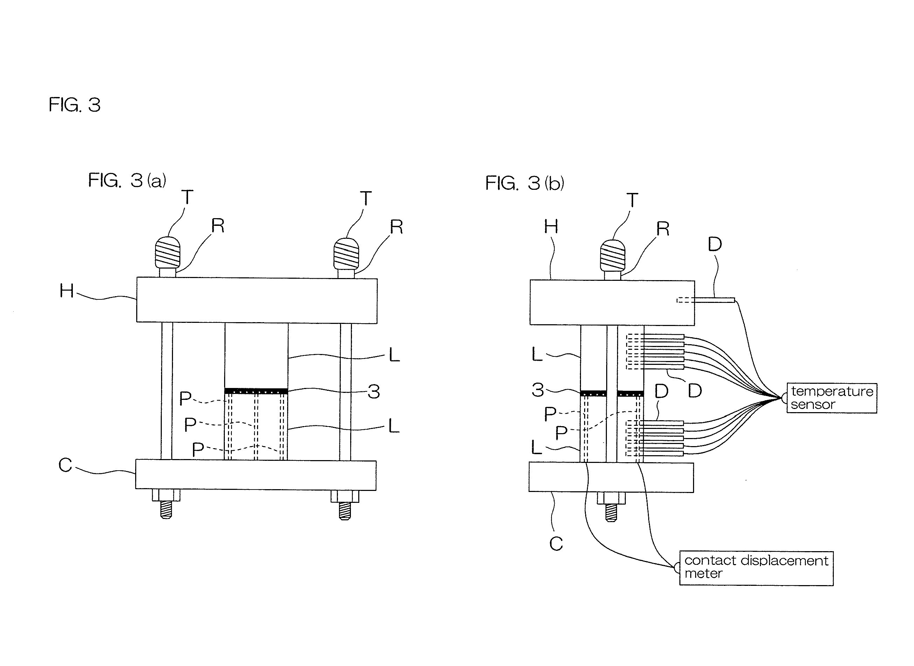

The measurement of the thermal conductivity and the thermal resistance was performed using a thermal property evaluation apparatus shown in FIG. 3.

To be specific, each of the thermally conductive pressure-sensitive adhesive sheets S (20 mm × 20 mm) in Examples and Comparative Examples was sandwiched between one pair of blocks (may be referred to as rods) L, each of which was made of aluminum (A5052, thermal conductivity: 140 W/m·K) and was formed to be a cube having one side of 20 mm, and the one pair of the blocks L was attached to each other via an adhesive sheet.

Then, the one pair of the blocks L was disposed up and down between a heating element (heater block) H and a heat dissipating element (a cooling base board composed so that cooling water circulated inside thereof) C. To be specific, the heating element H was disposed on the upper-side block L and the heat dissipating element C was disposed below the lower-side block L.

At this time, the one pair of the blocks L attached to each other by the thermally conductive pressure-sensitive adhesive sheet S was positioned between one pair of pressure adjusting screws T that penetrated through the heating element H and the heat dissipating element C. Load cells R were disposed between the pressure adjusting screws T and the heating element H. The structure was made so as to measure a pressure at the time of allowing the pressure adjusting screws T to be tightened and the obtained pressure was used as a pressure applied to the thermally conductive pressure-sensitive adhesive sheet S.

To be specific, in this test, the pressure adjusting screws T were tightened so that a pressure applied to the thermally conductive pressure-sensitive adhesive sheet S was 25 N/cm$^2$ (250 kPa).

Also, three probes P (a diameter of 1 mm), which were a contact displacement meter, were provided so as to penetrate through the lower-side block L and the thermally conductive pressure-sensitive adhesive sheet S from the side of the heat dissipating element C. At this time, the upper end portions of the probes P were in a state of being in contact with the lower surface of the upper-side block L. The structure was made so as to be capable of measuring a gap between the upper-side block L and the lower-side block L (the thickness of the adhesive sheet S).

Temperature sensors D were put in the heating element H and the upper-side and lower-side blocks L. To be specific, the temperature sensor D was put in one place in the heating element H and the temperature sensors D were put in five places with intervals of 5 mm in the up-down direction of each of the blocks L.

In the measurement, first, the pressure adjusting screws T were tightened to apply a pressure to the thermally conductive pressure-sensitive adhesive sheet S and the temperature of the heating element H was set to be 80°C, while cooling water at 20°C was circulated in the heat dissipating element C.

After the temperature of the heating element H and the upper-side and lower-side blocks L was stabilized, the temperature of the upper-side and lower-side blocks L was measured with the temperature sensors D. The heat flux passing through the thermally conductive pressure-sensitive adhesive sheet S was calculated from the thermal conductivity (W/m·K) and the temperature gradient of the upper-side and lower-side blocks L, and the temperature at the interfacial surfaces of the upper-side and lower-side blocks L with the thermally conductive pressure-sensitive adhesive sheet S was calculated. Using the obtained values, the thermal conductivity (W/m·K) and the thermal resistance (cm$^2$·K/W) at the pressure were calculated by using the following heat conduction equation (the Fourier's law).

$$Q = -\lambda \mathrm{grad} T$$

$$R = L/\lambda$$

Q: heat flux per unit area
gradT: temperature gradient
L: thickness of sheet
$\lambda$: thermal conductivity
R: thermal resistance

[Table 1]

Table 1

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Thermally Conductive Particles | mass % | 67 | 77 | 77 | 77 | 77 | 77 | 77 | 77 |
| Proportion of First Thermally Conductive Particles in Thermally Conductive Particles | mass % | 50 | 12.5 | 37.5 | 50 | 62.5 | 75 | 50 | 50 |
| Proportion of SecondThermally Conductive Particles in Thermally Conductive Particles | mass % | 50 | 87.5 | 62.5 | 50 | 37.5 | 25 | 50 | 50 |
| Viscosity | Pa·s | 21 | >50 | 27 | 23.8 | 23.3 | 41.5 | 24 | 22 |
| Elongation | % | 1630 | 1550 | 1326 | 1265 | 939 | 251 | 737 | 830 |
| Tensile Elastic Modulus | MPa | 0.55 | 2.8 | 1.2 | 2.3 | 3.4 | 8.0 | 0.50 | 1.1 |
| 90 Degree Adhesive Force | [N/20mm] | 25.7 | 3.7 | 15.8 | 31.3 | 28.6 | 10.4 | 30 | 19.6 |
| Holding Force (at 80°C) | Displacement [mm] | 0.6 | Falling | 3.275 | 0.4 | 0.2 | 0.1 | 0.6 | 0.3 |
| Hardness | [-] | 43 | 90 | 80 | 71 | 57 | 50 | 33.4 | 40 |
| Thermal Conductivity | [W/m·K] | 0.814 | 1.2 | 1.2 | 1.2 | 1.2 | 1.2 | 1.0 | 1.6 |
| Thermal Resistance | [cm$^2$K/W] | 8.1 | 5.4 | 4.1 | 4.2 | 8.7 | 9.4 | 6.27 | 5.8 |

[Table 2]

Table 2

| | | Comp. Ex. 1 | Comp. Ex. 2 | Comp. Ex. 3 | Comp. Ex. 4 |
|---|---|---|---|---|---|
| Thermally Conductive Particles | mass % | 77 | 50 | 77 | 77 |
| Proportion of First Thermally Conductive Particles in Thermally Conductive Particles | mass % | 0 | 50 | 100 | 0 |
| Proportion of SecondThermally Conductive Particles in Thermally Conductive Particles | mass % | 100 | 50 | 0 | 50 (H-31) 50 (H-10) |
| Viscosity | Pa·s | - | 20 | >50 | 750 |
| Elongation | % | - | 2241 | 271 | 1178 |
| Tensile Elastic Modulus | MPa | - | 0.33 | 15.4 | 11.8 |
| 90 Degree Adhesive Force | [N/20mm] | - | 19.4 | 2.89 | 5.31 |
| Holding Force (at 80°C) | Displacement [mm] | - | 0.8 | 0.1 | 0.3 |
| Hardness | [-] | - | 15 | 56 | 40 |
| Thermal Conductivity | [W/m·K] | - | 0.3 | 1.0 | 1.0 |
| Thermal Resistance | [cm$^2$K/W] | - | 13.3 | 9.5 | 8.0 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

Industrial Applicability

The thermally conductive pressure-sensitive adhesive sheet of the present invention is capable of being preferably used for uses such as a semiconductor device, a hard disk, an LED device (a television, lighting, a display, and the like), an EL device (an organic EL display, organic EL lighting, and the like), a capacitor, a condenser, a battery (a lithium ion battery and the like), and a power module.

**Claims**

1.  A pressure-sensitive adhesive material comprising:

    a monomer and/or a polymer and 55 mass % or more of thermally conductive particles, wherein
    the thermally conductive particles contain
    first thermally conductive particles having a particle size of primary particle based on volume of less than 10 μm and having a first particle size distribution and
    second thermally conductive particles having a particle size of primary particle based on volume of 10 μm or more and having a second particle size distribution and
    the first thermally conductive particles are contained in the thermally conductive particles at a ratio of 10 to 80 mass % and
    the second thermally conductive particles are contained in the thermally conductive particles at a ratio of 20 to 90 mass %.

2.  The pressure-sensitive adhesive material according to claim 1, wherein
    the first thermally conductive particles are contained in the thermally conductive particles at a ratio of 20 to 80 mass % and
    the second thermally conductive particles are contained in the thermally conductive particles at a ratio of 20 to 80 mass %.

15

3. The pressure-sensitive adhesive material according to claim 1, wherein
   the thermally conductive particles are a hydrated metal compound.

4. The pressure-sensitive adhesive material according to claim 1, wherein
   the pressure-sensitive adhesive material has a viscosity at 23°C measured by using a B-type viscometer of 50 Pa·s or less.

5. A thermally conductive pressure-sensitive adhesive sheet comprising:

   a pressure-sensitive adhesive layer obtained by allowing a pressure-sensitive adhesive material containing a monomer and/or a polymer and 55 mass % or more of thermally conductive particles to react, wherein
   the thermally conductive particles contain
   first thermally conductive particles having a particle size of primary particle based on volume of less than 10 μm and having a first particle size distribution and
   second thermally conductive particles having a particle size of primary particle based on volume of 10 μm or more and having a second particle size distribution and
   the first thermally conductive particles are contained in the thermally conductive particles at a ratio of 10 to 80 mass % and
   the second thermally conductive particles are contained in the thermally conductive particles at a ratio of 20 to 90 mass %.

6. The thermally conductive pressure-sensitive adhesive sheet according to claim 5, wherein
   the pressure-sensitive adhesive layer has a tensile elastic modulus of 0.1 to 10 MPa.

7. The thermally conductive pressure-sensitive adhesive sheet according to claim 5, wherein
   the thermally conductive pressure-sensitive adhesive sheet has a peel adhesive force of 3 N/20 mm or more at the time of being peeled from an aluminum board at a peeling angle of 90 degrees and a peeling rate of 300 mm/min after adhering to the aluminum board.

8. The thermally conductive pressure-sensitive adhesive sheet according to claim 5, wherein
   the thermally conductive pressure-sensitive adhesive sheet has hardness of 90 or less at the time of being measured 30 seconds after being brought into tight contact with a pressure surface of a type C durometer in a type C hardness test.

9. The thermally conductive pressure-sensitive adhesive sheet according to claim 5, wherein
   the pressure-sensitive adhesive layer has thermal conductivity of 0.3 W/m·K or more.

FIG. 1

FIG. 1 (a)

FIG. 1 (b)

FIG. 1 (c)

FIG. 2

content rate of first thermally
conductive particles (%)

FIG. 3

FIG. 3 (a)

FIG. 3 (b)

temperature sensor

contact displacement meter

FIG. 4

particle size ($\mu$ m)

## INTERNATIONAL SEARCH REPORT

| | International application No. |
|---|---|
| | PCT/JP2013/052267 |

A. CLASSIFICATION OF SUBJECT MATTER
*C09J201/00*(2006.01)i, *C09J4/00*(2006.01)i, *C09J7/00*(2006.01)i, *C09J11/04* (2006.01)i

According to International Patent Classification (IPC) or to both national classification and IPC

B. FIELDS SEARCHED

Minimum documentation searched (classification system followed by classification symbols)
C09J1/0-201/10

Documentation searched other than minimum documentation to the extent that such documents are included in the fields searched
Jitsuyo Shinan Koho           1922-1996   Jitsuyo Shinan Toroku Koho   1996-2013
Kokai Jitsuyo Shinan Koho     1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-027039 A (Dainippon Ink and Chemicals, Inc.),<br>29 January 2004 (29.01.2004),<br>claims; paragraph [0007], [0013] to [0017], [0027] to [0028], [0031], [0038], [0042]<br>(Family: none) | 1-9<br>6,8 |
| X<br>Y | JP 2011-219511 A (Somar Corp.),<br>04 November 2011 (04.11.2011),<br>claims; paragraphs [0036] to [0037], [0040], [0044], [0059] to [0084]<br>(Family: none) | 1-5,7-9<br>6 |

[X] Further documents are listed in the continuation of Box C.     [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 April, 2013 (15.04.13) | 23 April, 2013 (23.04.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2013/052267 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2001-139733 A (Kitagawa Industries Co., Ltd.), 22 May 2001 (22.05.2001), claims; paragraphs [0042] to [0054] (Family: none) | 1,2,5,7,9 |
| Y | JP 2011-162706 A (Nitto Denko Corp.), 25 August 2011 (25.08.2011), claims; paragraphs [0004] to [0005], [0102] to [0104] & US 2012/0309879 A1 & EP 2535386 A1 & WO 2011/099369 A1 & TW 201144403 A & CN 102753638 A | 6 |
| Y | JP 10-306264 A (Dainippon Printing Co., Ltd.), 17 November 1998 (17.11.1998), claims; paragraphs [0026] to [0027] (Family: none) | 8 |
| P,X | WO 2012/108289 A1 (Nitto Denko Corp.), 16 August 2012 (16.08.2012), claims; paragraph [0050], [0118], [0143] to [0144] & TW 201233761 A & JP 2012-180495 A | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002294192 A